Europäisches Patentamt

European Patent Office

Office européen des brevets

(11) Veröffentlichungsnummer: **0 253 373**
**B1**

(12) # EUROPÄISCHE PATENTSCHRIFT

(45) Veröffentlichungstag der Patentschrift:
24.01.90

(51) Int. Cl.⁴: **F16F 13/00**

(21) Anmeldenummer: 87110195.2

(22) Anmeldetag: 15.07.87

(54) Zweikammer-Motorlager.

(30) Priorität: 18.07.86 DE 3624361

(43) Veröffentlichungstag der Anmeldung:
20.01.88 Patentblatt 88/3

(45) Bekanntmachung des Hinweises auf die Patenterteilung:
24.01.90 Patentblatt 90/4

(84) Benannte Vertragsstaaten:
DE ES FR GB IT SE

(56) Entgegenhaltungen:
EP-A- 0 042 909
EP-A- 0 057 774
EP-A- 0 219 786
DE-A- 2 948 408
DE-A- 3 016 421
GB-A- 610 958
GB-A- 2 105 438
GB-A- 2 166 516

PATENTS ABSTRACTS OF JAPAN; Band 10,
NR, 59 (M-459)(2116), 8.März 1986; &
JP-A-60205042 (TOUKAI GOMU KOGYO
K.K.) 16-10-1985
PATENTS ABSTRACTS OF JAPAN; Band 5,
NR. 170 (M-94)(842), 29.Oktober 1981; &
JP-A- 5694043 (TOYODA GOSEI K.K.) 30-07-1981

(73) Patentinhaber: METZELER Gesellschaft mit
beschränkter Haftung, Gneisenaustrasse 15,
D-8000 München 50(DE)

(72) Erfinder: Härtel, Volker, Fichtenstrasse 50,
D-8034 Germering(DE)

(74) Vertreter: Michelis, Theodor, Dipl.-Ing.,
Gneisenaustrasse 15, D-8000 München 50(DE)

## Beschreibung

Die Erfindung bezieht sich auf eine Zweikammer-Motorlager mit hydraulischer Dämpfung, insbesondere für Kraftfahrzeuge, mit einer kegelstumpfförmigen, die Motorlagerplatte abstützenden Tragfeder, die in ein oben offenes, topfförmiges Gehäuse mit einem Innendurchmesser entsprechend dem Außendurchmesser der zum Gehäuseboden sich öffnenden Tragfeder eingesetzt ist und zwischen ihrer Innenseite und dem Gehäuseboden eine Arbeitskammer begrenzt, während die offene Stirnseite zwischen Gehäuseumfangswandung und Motorlagerplatte von einer volumenweichen, gummielastischen Membran, die eine zwischen Tragfeder und Gehäuseumfangswandung liegende Ausgleichskammer begrenzt, abgeschlossen ist, und bei dem Arbeitskammer und Ausgleichskammer über einen Überströmkanal miteinander in Verbindung stehen.

Ein solches Motorlager ist aus der JP-A 60 205 042 bekannt. Dabei verläuft jedoch der Überströmkanal zentral und radial in der Motorlagerplatte mit seitlichen Ausströmöffnungen in die Ausgleichskammer zwischen Tragfeder und abdeckender Membran. Dadurch ist einmal eine relativ große Bauhöhe des Lagers erforderlich und zum anderen kann bei einer derartigen Ausgestaltung nur ein relativ kurzer Überströmkanal gebildet werden. Wesentlich für die Dämpfung eines solchen Lagers ist jedoch die Länge des Überströmkanals, d.h. je länger der Kanal ist, umso höher wird auch die Dämpfung durch die größere Reibung der im Überströmkanal gespeicherten Flüssigkeitsmenge sein.

Der vorliegenden Erfindung liegt daher die Aufgabe zugrunde, ein hydraulisch gedämpftes Motorlager der eingangs genannten Art zu schaffen, bei dem jedoch einmal die Bauhöhe des Lagers nicht wesentlich größer ist als die der Tragfeder und bei dem darüber hinaus ein Überströmkanal möglichst großer Länge geschaffen werden kann.

Zur Lösung dieser Aufgabe ist erfindungsgemäß vorgesehen, daß das Gehäuse angenähert die gleiche Höhe wie die Tragfeder aufweist, und daß der Überströmkanal über einen vorgegebenen Umfangswinkel im Fußbereich der Tragfeder verläuft und einen innenliegenden Durchlaß zur Arbeitskammer und einen außenliegenden Durchlaß zur Ausgleichskammer aufweist.

Besonders vorteilhaft ist es, wenn dabei am Fuß der Tragfeder ein angenähert konkav gewölbter starrer Ring anvulkanisiert ist, der zusammen mit der innenliegenden Gehäuseecke den Überströmkanal bildet.

Durch eine derartige Anordnung und Gestaltung wird einmal ein Motorlager sehr geringer Bauhöhe geschaffen und außerdem kann durch Anordnung des Überströmkanals im Fußbereich der Tragfeder eine Kanallänge erreicht werden, die mehr als das Doppelte des Durchmessers des Lagers beträgt.

Die beiden Durchlässe sind dabei zweckmäßigerweise um einen die Kanallänge bestimmenden Winkel zueinander versetzt angeordnet, wobei der verbleibende Kanalabschnitt im nichtdurchströmten Bodenbereich durch einen Einsatz verschlossen ist.

Zur zusätzlichen Halterung der Tragfeder kann diese ober oder halb ihres Fußteils durch eine umlaufende Sicke in der Gehäusewandung gesichert werden.

Als Schutz für die stirnseitige Membran kann die obere Stirnseite des Gehäuses mit einer den Gehäuserand mit Spiel umgreifenden, starren Kappe abgedeckt sein, die gleichzeitig als Anschlag in vertikaler Richtung dient.

Neben einer herkömmlichen Anordnung einer Entkopplungsmembran auf der Unterseite der Motorlagerplatte ist es aber auch möglich, durch partielle, kreisscheibenförmige Verminderung der Wandstärke der Tragfeder eine integrale Entkopplungsmembran zu bilden.

Ferner ist es grundsätzlich möglich, daß das Gehäuse aus einem zylindrischen Wandungsteil und einer gesonderten Bodenplatte besteht, wobei die Tragfeder mit ihrem Fußbereich in das zylindrische Wandungsteil einvulkanisiert und die Bodenplatte anschließend flüssigkeitsdicht aufgesetzt ist.

Anhand einer schematischen Zeichnung sind Aufbau und Wirkungsweise eines Ausführungsbeispiels nach der Erfindung näher erläutert. Dabei zeigen

Fig. 1 einen Längsschnitt durch ein Motorlager entsprechend der Schnittlinie I-I nach Fig. 2;

Fig. 2 einen Querschnitt durch das Motorlager oberhalb des Überströmkanals ohne die gummielastische Tragfeder und

Fig. 3 einen Längsschnitt durch eine weitere Ausführungsform des Motorlagers mit gesondert aufgesetzter Bodenplatte.

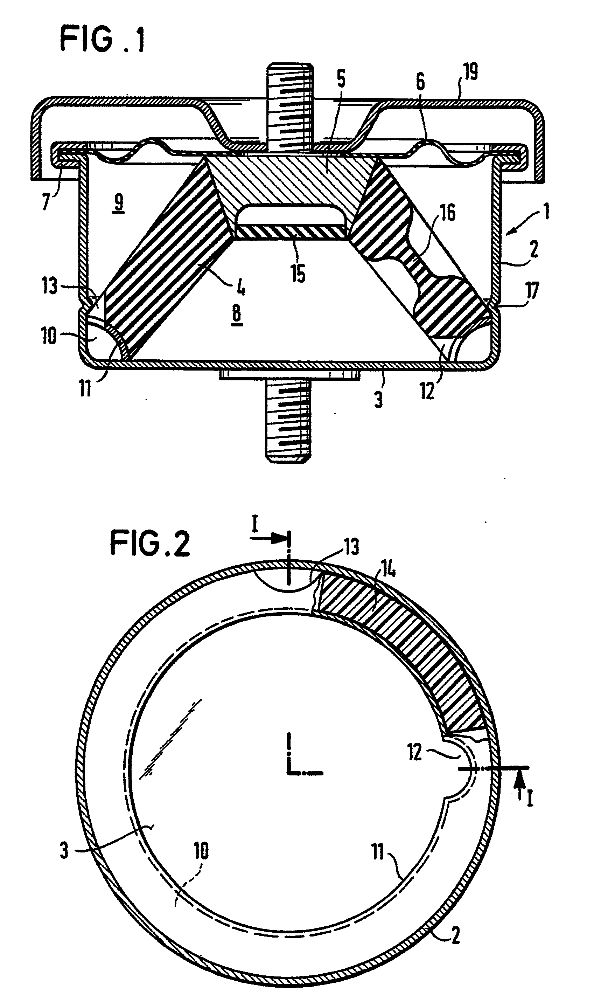

Wie man aus Fig. 1 ersieht, weist das Motorlager ein oben offenes, topfförmiges Gehäuse 1 mit einem zylindrischen Wandungsteil 2 und einer ebenen Bodenplatte 3 auf. In dieses Gehäuse 1 ist das wie bei einem konventionellen Motorlager kegelstumpfförmige Oberteil mit der kegeligen Tragfeder 4 aus einem gummielastischen Material und die stirnseitig einvulkanisierte Motorlagerplatte 5 eingesetzt, wobei der Innendurchmesser des Gehäuses 1 dem großen Außendurchmesser der Tragfeder 4 entspricht. Die Höhe des zylindrischen Gehäuseteils 2 entspricht dabei der Höhe der Tragfeder 4 unter statischer Last. Stirnseitig ist der freie Ringraum zwischen Motorlagerplatte 5 und Gehäusewandung 2 durch eine ringförmige gummielastische und volumenweiche Membran 6 verschlossen, die flüssigkeitsdicht mit dem oberen Flansch 7 der Gehäusewandung 2 und der Motorlagerplatte 5 verbunden ist.

Damit ergibt sich also eine Arbeitskammer 8, die von der Tragfeder 4, der Motorlagerplatte 5 und der Gehäusebodenplatte 3 umschlossen ist, sowie eine Ausgleichskammer 9 auf gleicher Höhe, die von der Außenfläche der Tragfeder 4 aus der zylindrischen Gehäusewandung 2 sowie der Membran 6 begrenzt ist. Die hydraulische Verbindung zwischen diesen beiden Kammern 8 und 9 wird durch einen Überströmkanal 10 am Fuß der Tragfeder 4 hergestellt. Dabei ist zweckmäßigerweise am Fuß der Tragfeder 4 ein konkav gewölbter, metallischer Ring 11 einvulkanisiert, der zusammen mit der entsprechenden Gehäuseecke, die von der Bodenplatte 3 und der Wandung 2 gebildet wird, den Überströmkanal 10 begrenzt. Dieser Kanal 10 steht über einen nach innen gerichteten Durchlaß 12 mit der Arbeitskammer 8 und einen nach oben gerichteten Durchlaß 13 mit der Ausgleichskammer 9 in Verbindung.

Wie man dazu insbesondere aus Fig. 2 ersieht, die einen Blick auf den Metallring 11 mit weggelassener Tragfeder 4 zeigt, sind die entsprechenden Durchlässe 12 und 13 im Metallring 11 bei dem dargestellten Ausführungsbeispiel um etwa 270° zueinander versetzt, so daß sich ein Überströmkanal von 3/4 der Länge des Gehäuseumfanges ergibt. Durch entsprechende Anordnung und Zuordnung der Durchlässe 12 und 13 kann dabei jedoch die Kanallänge beliebig variiert und in weiten Grenzen eingestellt werden. Der nicht durchströmte Bereich des Überströmkanals zwischen den beiden Durchlässen 12 und 13 ist zweckmäßigerweise mit einem entsprechenden Stopfen oder einer plastischen Masse 14 verschlossen, wie sie schraffiert in Fig. 2 eingezeichnet ist.

Durch diese Anordnung des Überströmkanals 10 an der Außenkontur des Gehäuses sind sehr lange Kanäle mit einem vergleichbar großen Querschnitt möglich, so daß damit auch hochviskose Flüssigkeiten als Arbeitsflüssigkeit verwendet werden können.

Etwa erforderliche Entkopplungselemente können jetzt in herkömmlicher Weise als Membran 15 in die Motorlagerplatte 5 eingelassen werden. Es ist aber auch möglich, einen Abschnitt der Tragfeder 4 partiell dünner auszubilden, so daß sich dann bei entsprechender kreisscheibenförmiger Verminderung der Wandstärke eine integrierte Entkopplungsmembran 16 ergibt.

Zur Fixierung der Tragfeder 4 kann die Gehäusewandung 2 mit einer ganz oder über Teilbereiche umlaufende Sicke 17 versehen werden, die praktisch als Anschlag für den Metallring 11 dient und die Tragfeder 4 in ihrer Lage fixiert. Das Motorlager kann dann über nicht näher dargestellte Bohrungen im Gehäuse 1 gefüllt werden, wobei diese Bohrungen anschließend durch Nieten oder Dichtstopfen verschlossen werden.

Zur mechanischen Sicherung der die Ausgleichskammer 9 abschließenden Gummimembran 6 kann auf die Motorlagerplatte 5 noch eine starre Kappe 19 aufgesetzt werden, die zweckmäßigerweise den oberen Flansch 7 des Gehäuses 1 mit Spiel umfaßt und damit gleichzeitig als Anschlag gegen eine zu starke Einsenkung der Tragfeder 4 wirkt.

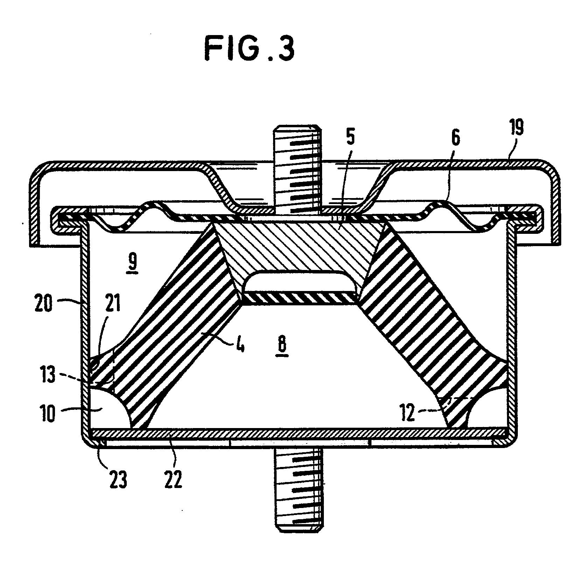

Eine weitere Gestaltungsmöglichkeit ist in Fig. 3 gezeigt. Dabei ist die Tragfeder 4 in die zunächst als zylindrisches Rohr vorliegende Gehäusewandung 20 einvulkanisiert, so daß im Bereich 21 eine fest haftende Verbindung hergestellt wird. Nach Montage der übrigen Teile wird dann die gesondert vorliegende, untere Stirnfläche 22 mit einer umlaufenden Gummidichtung 23 versehen und flüssigkeitsdicht mit dem zylindrischen Gehäuse 20 verbunden. In diesem Fall wird der Überströmkanal 10 ohne einvulkanisierten Metallring allein durch entsprechende Formgebung des Fußes der Tragfeder 4 gebildet, der über entsprechende Durchlässe 12 und 13 mit der Arbeitskammer 8 und der Ausgleichskammer 9 in Verbindung steht.

Der wesentliche Vorteil eines derart gestalteten Motorlagers besteht in seiner geringen Bauhöhe, da jetzt die Ausgleichskammer 9 die Arbeitskammer 8 ringförmig umschließt. Darüber hinaus ist diese Konstruktion weitgehend gegen das Auslaufen von Flüssigkeit gesichert.

Darüber hinaus ist nur noch die volumenweiche obere Membran 6 der äußeren Atmosphäre ausgesetzt. Da diese Membran statisch nicht und dynamisch nur wenig belastet ist, läßt sich sich aus einem hitze-, alterungs- und ozonbeständigen Elastomer, z.B. EPDM, fertigen. Die Tragfeder 4 ist völlig von Flüssigkeit umgeben und somit vor dem Einfluß von Ozon und Luftsauerstoff, die zu einem vorzeitigen Altern der meist aus Naturkautschuk bestehenden Tragfedern führen können, geschützt. Das erlaubt beispielsweise einen weitgehenden Verzicht auf Alterungs- und Ozonschutzmittel, vor allem Wachse, die die dynamischen Eigenschaften der Kautschukmischungen und die Haftfestigkeit von Gummimetallverbindungen negativ beeinflussen können. Durch die Gestaltung ist darüber hinaus trotz der niedrigen Bauhöhe des Systems ein sehr lang ausführbarer Überströmkanal 10 mit relativ großem Querschnitt möglich, wodurch sehr niedrige Abstimmungsfrequenzen des Lagers erreicht werden können.

## Patentansprüche

1. Zweikammer-Motorlager mit hydraulischer Dämpfung, insbesondere für Kraftfahrzeuge, mit einer kegelförmigen, die Motorlagerplatte abstützenden Tragfeder (4), die in ein oben offenes, topfförmiges Gehäuse (1) mit einem Innendurchmesser entsprechend dem Außendurchmesser der zum Gehäuseboden sich öffnenden Tragfeder eingesetzt ist und zwischen ihrer Innenseite und dem Gehäuseboden eine Arbeitskammer (8) begrenzt, während die offene Stirnseite zwischen Gehäuseumfangswandung (2) und Motorlagerplatte (5) von einer volumenweichen, gummielastischen Membran (6), die eine zwischen Tragfeder und Gehäuseumfangswandung liegende Ausgleichskammer (9) begrenzt, abgeschlossen ist, und bei dem Arbeitskammer und Ausgleichskammer über einen Überströmkanal (10) miteinander in Verbindung stehen, dadurch gekennzeichnet, daß das Gehäuse (1) angenähert die gleiche Höhe wie die Tragfeder (4) aufweist und daß der Überströmkanal (10) über einen vorgegebenen Umfangswinkel im Fußbereich der Tragfeder (4) verläuft und einen innenliegenden Durchlaß (12) zur Arbeitskammer (8) und einen außenliegenden Durchlaß (13) zur Ausgleichskammer (9) aufweist.

2. Zweikammer-Motorlager nach Anspruch 1, dadurch gekennzeichnet, daß am Fuß der Tragfeder (4) ein angenähert konkav gewölbter starrer Ring (11) anvulkanisiert ist, der zusammen mit der innenliegenden Gehäuseecke den Überströmkanal (10) bildet.

3. Zweikammer-Motorlager nach Anspruch 2, dadurch gekennzeichnet, daß die beiden Durchlässe (12, 13) um einen die Kanallänge bestimmenden Winkel zueinander versetzt angeordnet sind und der verbleibende Kanalabschnitt im nichtdurchströmten Bodenbereich durch einen Einsatz (14) verschlossen ist.

4. Zweikammer-Motorlager nach Anspruch 1 bis 3, dadurch gekennzeichnet, daß die Tragfeder (4) oberhalb ihres Fußteils durch eine umlaufende Sicke (17) in der Gehäusewandung (2) gesichert ist.

5. Zweikammer-Motorlager nach Anspruch 1 bis 4, dadurch gekennzeichnet, daß die Membran (6) von einer an der Motorlagerplatte (5) festgelegten und den Gehäuserand (7) mit Spiel umgreifenden, starren Kappe (20) abgedeckt ist.

6. Zweikammer-Motorlager nach Anspruch 1, dadurch gekennzeichnet, daß durch kreisscheibenförmige partielle Verminderung der Wandstärke der Tragfeder (4) eine integrale Entkopplungsmembran (16) gebildet ist.

7. Zweikammer-Motorlager nach Anspruch 1, dadurch gekennzeichnet, daß das Gehäuse (1) aus einem zylindrischen Wandungsteil (20) und einer gesonderten Bodenplatte (22) besteht, daß die Tragfeder (4) mit ihrem die Oberseite des Überströmkanals (10) aussparenden Fußteil in das zylindrische Wandungsteil (20) einvulkanisiert und die Bodenplatte (22) anschließend flüssigkeitsdicht aufgesetzt ist.

## Claims

1. Double-chamber engine mount with hydraulic damping, in particular for motor vehicles, having a frustum-shaped support spring (4) supporting the engine mount plate, which support spring (4) is inserted into a pot-shaped housing (1) open at the top and having an internal diameter corresponding to the outer diameter of the support spring which opens to the housing base, and delimits a working chamber (8) between its inner side and the housing base, whereas the open end face between peripheral housing wall (2) and engine mount plate (5) is sealed by a flexible-volume rubber-elastic membrane (6) which delimits a compensating chamber (9) disposed between support spring and peripheral housing wall, and in which working chamber and compensating chamber are connected by means of an overflow channel (10), characterised in that the housing (1) has approximately the same height as the support spring (4), and in that the overflow channel (10) extends over a predetermined peripheral angle in the foot region of the support spring (4) and has an inner passage (12) to the working chamber (8) and an outer passage (13) to the compensating chamber (9).

2. Double-chamber engine mount according to claim 1, characterised in that an approximately concave arched rigid ring (11) is vulcanised onto the foot of the support spring (4), which ring (11) together with the inner housing corner forms the overflow channel (10).

3. Double-chamber engine mount according to claim 2, characterised in that the two passages (12, 13) are arranged offset to one another by an angle determining the channel length, and the remaining channel section is sealed by an insert (14) in the base region where there is no flow.

4. Double-chamber engine mount according to claim 1 to 3, characterised in that the support spring (4) is secured above its foot part by means of a surrounding bead (17) in the housing wall (2).

5. Double-chamber engine mount according to claim 1 to 4, characterised in that the membrane (6) is covered by a rigid casing (20) gripping the housing edge (7) with clearance and attached to the engine mount plate (5).

6. Double-chamber engine mount according to claim 1, characterised in that an integral decoupling membrane (16) is formed by means of partial reduction of the wall thickness of the support spring (4) in the shape of circular discs.

7. Double-chamber engine mount according to claim 1, characterised in that the housing (1) comprises a cylindrical wall part (20) and a separate base plate (22), in that the support spring (4) is vulcanised into the cylindrical wall part (20) with its foot part forming the upper side of the overflow channel (10) and the base plate (22) is then attached in a fluidtight manner.

## Revendications

1. Support de moteur, à deux chambres et à amortissement hydraulique, notamment pour véhicules automobiles, comprenant un ressort de suspension (4) de forme tronconique, qui soutient la plaque de support du moteur, qui est introduit dans une enveloppe (1) en forme de godet, ouverte vers le haut et ayant un diamètre intérieur correspondant au diamètre extérieur du ressort de suspension s'ouvrant vers le fond de l'enveloppe et qui délimite une chambre de travail (8) entre son côté intérieur et le fond de l'enveloppe, tandis que le côté frontal ouvert entre la paroi périphérique (2) de l'enveloppe et la plaque de support (5) du moteur est fermé par une membrane (6) souple, ayant l'élasticité du caoutchouc et qui délimite une chambre de compensation (9) entre le ressort de suspension et la paroi périphérique de l'enveloppe, et dans lequel la chambre de travail et la chambre de compensation communiquent entre elles par un canal de passage (10), caractérisé en ce que l'enveloppe (1) a approximativement la même hauteur que le ressort de suspension (4) et en ce que le canal de passage (10) s'étend sur un angle inscrit prescrit dans la région du pied de ressort de suspension (4) et comporte un passage intérieur (12) vers la chambre de travail (8) et un passage extérieur (13) vers la chambre de compensation (9).

2. Support de moteur à deux chambres suivant la revendication 1, caractérisé en ce que, sur le pied du ressort de suspension (4), est vulcanisé un anneau (11) rigide, approximativement concave et formant avec le sommet intérieur de l'enveloppe le canal de passage (10).

3. Support de moteur à deux chambres suivant la revendication 2, caractérisé en ce que les deux passages (12, 13) sont décalés l'un par rapport à l'autre d'un angle définissant la longueur du canal, et le tronçon de canal, restant dans la région du fond où rien ne passe, est fermé par une pièce rapportée (14).

4. Support de moteur à deux chambres suivant l'une des revendications 1 à 3, caractérisé en ce que le ressort de suspension (4) est bloqué, au-dessus de sa partie formant pied, par une moulure (17) s'étendant sur tout le pourtour et ménagée dans la paroi de l'enveloppe (2).

5. Support de moteur à deux chambres suivant l'une des revendications 1 à 4, caractérisé en ce que la membrane (6) est recouverte d'un capot (20) rigide, fixé sur la plaque de support (5) du moteur et entourant, avec jeu, le bord (7) de l'enveloppe.

6. Support de moteur à deux chambres suivant la revendication 1, caractérisé en ce qu'une membrane intégrée de désaccouplement (16) est formée par diminution partielle en forme de disque circulaire de l'épaisseur de la paroi du ressort de suspension (4).

7. Support de moteur à deux chambres suivant la revendication 1, caractérisé en ce que l'enveloppe (1) est constituée d'une partie cylindrique de paroi (20) et d'une plaque de fond (22) distincte, en ce que le ressort de suspension (4) est vulcanisé par sa partie formant pied ménageant le côté supérieur du canal de passage (10), à la partie cylindrique de paroi (20), et la plaque de fond (22) est posée ensuite de manière étanche aux liquides.

FIG .1

FIG.2

# FIG .3